Europäisches Patentamt

European Patent Office

Office européen des brevets

(19)

(11) Numéro de publication : **0 041 895**
**B1**

(12)

# FASCICULE DE BREVET EUROPÉEN

(45) Date de publication du fascicule du brevet :
28.11.84

(51) Int. Cl.³ : **H 04 J  6/00, H 04 L  1/10**

(21) Numéro de dépôt : 81400896.7

(22) Date de dépôt : 05.06.81

(54) Procédé et dispositif de transmission de données numériques sous forme de paquets.

(30) Priorité : 06.06.80 FR 8012672

(43) Date de publication de la demande :
16.12.81 Bulletin 81/50

(45) Mention de la délivrance du brevet :
28.11.84 Bulletin 84/48

(84) Etats contractants désignés :
DE GB IT NL SE

(56) Documents cités :
FR-A- 2 118 888
FR-A- 2 277 473
FR-A- 2 313 825
US-A- 2 570 505

(73) Titulaire : L'Etat Français représenté par le Secrétaire d'Etat aux Postes et Télécommunications et à la
Télédiffusion
(Centre National d'Etudes des Télécommunications)
38-40 rue du Général Leclerc
F-92131 Issy-les-Moulineaux (FR)

Etablissement Public de Diffusion dit "Télédiffusion
de France"
21-27 rue Barbès
F-92120 Montrouge (FR)

(72) Inventeur : Mathieu, Michel
12, rue Jacques Cartier
F-35830 Betton (FR)
Inventeur : Charbonnel, Pierre
2, rue Surcouf
F-35830 Betton (FR)
Inventeur : Pacaud, Jean-Claude
24, Boulevard Oscar Leroux
F-35100 Rennes (FR)

(74) Mandataire : Fort, Jacques et al
CABINET PLASSERAUD 84, rue d'Amsterdam
F-75009 Paris (FR)

# 0 041 895

**Description**

La présente invention concerne la transmission de données numériques sous forme de paquets, le terme « transmission » devant être interprété dans un sens large et comme couvrant non seulement l'envoi de données d'un émetteur à un récepteur déterminé, mais aussi notamment la diffusion de telles données à plusieurs points de réception non prédéfinis. Elle trouve une application particulièrement importante, bien que non exclusive, dans le domaine de la transmission de données numériques représentant des signaux sonores, tels que messages téléphonés et sons de haute qualité, en monophonie ou en stéréophonie.

La transmission de données numériques sous forme de paquets est bien connue et on ne rappellera que brièvement les caractéristiques essentielles des structures de messages utilisant une procédure par paquets, dans la mesure nécessaire à la compréhension de l'invention. Une description plus complète pourra être trouvée dans le document FR-A-23 13 825 qui prévoit la transmission d'un signal de télévision par paquets de chacun 40 octets pour correspondre à la durée d'une ligne, et dans la Revue de Radiodiffusion Télévision n° 40 (novembre-décembre 1975) auxquels on pourra se reporter.

Les données numériques sont réparties en paquets, constitués chacun par un ensemble formé d'une zone en début de paquet, appelée préfixe, et d'une zone de données utiles, ou partie utile. Le préfixe définit la structure de la partie utile du message. La partie utile est constituée par un fragment des services numériques, eux-mêmes constitués par une succession en mode série de mots de x éléments binaires représentatifs du signal à transmettre ou à diffuser. Dans le cas où les données sont constituées par des signaux sonores, les mots représenteront généralement les échantillons numérisés.

Cette structure est reconstituée au niveau du récepteur en regroupant un nombre fixe de mots pour former une entité appelée « trame numérique », de longueur constante l, comportant un en-tête constitué par un mot particulier et reconnaissable, appelé « mot de verrouillage de trame ». Ce mot de verrouillage permet au récepteur de découper convenablement le train reçu en mots de x éléments binaires. Ainsi, le train résultant comporte le mot de verrouillage de trame à intervalles périodiques réguliers.

Les avantages de la procédure par paquets sont connus : chaque paquet est autonome et n'impose pas une continuité du train numérique résultant. La procédure est transparente à l'égard du système utilisé pour transmettre, mémoriser ou diffuser le train numérique. Dans le cas d'un réseau de transmission comportant plusieurs voies utilisables en alternance, la procédure par paquets permet une utilisation optimale de la capacité du réseau.

En contrepartie, les procédures d'insertion actuellement utilisées font que la perte d'un paquet provoque une perte de continuité du service numérique. On voit immédiatement qu'une telle perte, due à une mauvaise reconstitution des informations contenues dans le préfixe, provoque la perte de la totalité des données insérées dans la partie utile du paquet. Mais, de plus, du fait que la longueur de la partie utile est seulement bornée, donc est variable, la perte d'un paquet entraîne généralement une rupture dans la périodicité du train numérique. Le récepteur détecte que la phase du mot de verrouillage de trame par rapport à sa base de temps locale n'est plus correcte. Une recherche de synchronisation par détection d'une configuration correspondant au mot de verrouillage de trame est alors nécessaire. Pendant cette recherche, le service est interrompu.

La présente invention vise notamment à améliorer la continuité du service en cas de perte de paquet, en évitant la nécessité d'une recherche de synchronisation. Dans ce but, l'invention propose un procédé de transmission de données numériques suivant une procédure par paquets contenant $k$ trames de chacune $n$ mots de plusieurs éléments binaires, caractérisé en ce qu'à l'insertion, on impose aux paquets un format fixe, prédéterminé à l'émission et à la réception, ayant une longueur prédéterminée $L$ de la partie utile et en ce qu'on structure les données suivant une trame de longueur fixe $l$ qui est un sous-multiple de $L$.

En d'autres termes, on adopte des valeurs de $L$ et de $l$ telles que $L = k \cdot l$ ($k$ étant un entier).

Le formatage en paquets de longueur fixe $L$ est rendu possible par programmation implicite du format des paquets au niveau du multiplexeur que comporte l'émetteur et au niveau du récepteur. Le mot « implicite » signifie établi par convention et déterminé à l'avance au niveau de l'émetteur et du récepteur de façon à n'exiger aucun envoi d'information supplémentaire avant les données pour fournir au récepteur les valeurs $l$ et $L$.

Le procédé qui vient d'être défini permet de réduire la perte d'information au contenu de la partie utile du paquet perdu : il supprime en effet la nécessité d'une recherche de synchronisation.

Un résultat annexe recherché par l'invention est la détection de perte de paquets et, éventuellement, la détermination du nombre de paquets perdus : dans ce but, on affecte avantageusement un mot d'indice de continuité, constitué de plusieurs éléments binaires ou « bits », soit à chaque paquet, soit à chaque trame. Dans le premier cas, l'indice est inséré dans le préfixe dans chaque paquet et incrémenté d'une unité à chaque paquet transmis ou diffusé. Dans le second cas, il est inséré dans la trame et incrémenté à chaque trame de service transmise ou diffusée.

Cette détection permet de restituer artificiellement au niveau du récepteur, le nombre manquant des mots représentatifs d'échantillons, dans la mesure où il existe une corrélation entre ces échantillons et ceux qui les encadrent. Ce nombre manquant est calculable, puisque chaque trame possède un nombre constant d'échantillons et que le paquet perdu comporte un nombre constant et connu de trames.

2

Les échantillons ajoutés sont créés de façon à atténuer les effets de la rupture de transmission. En soi, la création d'un mot de substitution à un mot suspect, par détermination de la moyenne des deux mots adjacents, est connue (FR-A-22 77 473). L'invention permet aller au-delà et de créer, si un paquet comporte k trames de n mots représentatifs chacun d'un échantillon, est perdu, nk échantillons qui sont insérés entre le dernier échantillon N reçu avant rupture et le premier échantillon n + nk + 1 reçu après rétablissement.

L'invention propose également un dispositif permettant de mettre en œuvre le procédé ci-dessus défini, installation qui peut être constituée de circuits classiques et dont en conséquence seule la structure générale sera décrite ci-après.

Cette installation comporte un dispositif d'insertion à l'émission qui comprend des moyens pour répartir les données numériques, se présentant sous forme de mots de plusieurs éléments binaires, en paquets comprenant un préfixe et une partie utile et des moyens pour regrouper les mots sous forme de trames numériques successives précédées chacune d'un mot de verrouillage de trame de constitution reconnaissable, caractérisée en ce que lesdits moyens sont réalisés pour imposer aux paquets une longueur prédéterminée L de zone utile et pour structurer les données suivant une trame de longueur fixe I qui est un sous-multiple de L.

L'invention sera mieux comprise à la lecture de la description qui suit de modes particuliers d'exécution de l'invention, donnés à titre d'exemples non limitatifs. La description se réfère aux dessins qui l'accompagnent, dans lesquels :

la figure 1   est un schéma montrant la constitution de principe d'un paquet ;

la figure 2   montre la structure d'une trame numérique de service comportant un mot de verrouillage trame ;

la figure 3   est un schéma de principe montrant la décomposition en paquets d'un message suivant l'invention ;

les figures 4a et 4b   sont des schémas de principe montrant l'effet d'une perte de paquet lors de la mise en œuvre du procédé suivant l'invention ;

la figure 5   est un synoptique de principe d'une installation permettant de mettre en œuvre le procédé suivant l'invention ;

la figure 6   similaire à la figure 5, montre une variante de réalisation de l'installation comportant des moyens pour introduire et détecter un mot d'indice de continuité ;

la figure 7   est une représentation synoptique d'un système de restitution incorporable au récepteur de l'installation de la figure 6.

Avant de décrire l'invention, on rappellera quelques indications concernant l'insertion de données numériques suivant une procédure par paquets.

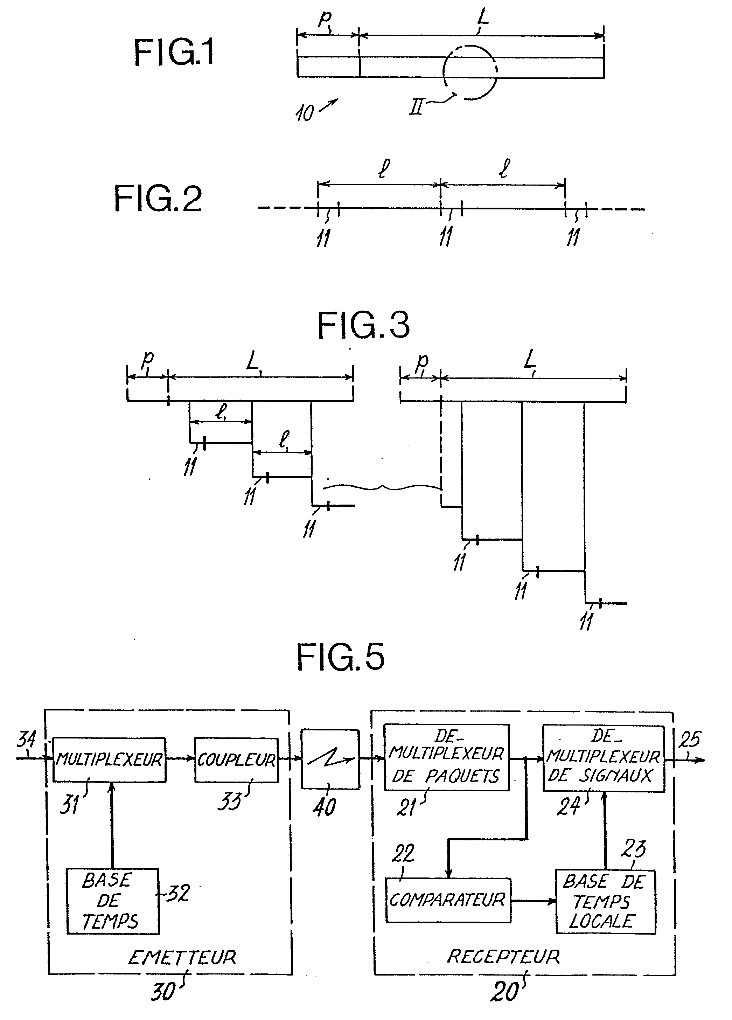

Chaque paquet autonome 10 (Fig. 1) est constitué par un préfixe de longueur p et une partie utile de longueur L. Cette partie utile est constituée par la juxtaposition de trames numériques successives de longueur constante I (Fig. 2), ayant chacune un nombre fixe n de mots de x éléments binaires, représentatifs d'échantillons du signal à transmettre ou diffuser, du moins dans le cas de signal analogique. Chaque trame comporte un en-tête constitué par un mot 11 de verrouillage de trame qui permet au récepteur de découper le train reçu.

Suivant l'invention, on donne à tous les paquets 10 une longueur utile L fixe et on définit les structures de service numérique sous forme de trames dont la longueur I est un sous-multiple de la longueur L des paquets, de sorte que $L = k \cdot I$.

A titre d'exemple, la figure 3 montre la structure d'un message dans le cas où $k = 3$, ce chiffre n'étant évidemment pas limitatif.

Il faut remarquer qu'il n'est pas nécessaire que le début de la partie utile, de longueur L, coïncide avec le début d'une trame pour assurer le service. De ce fait, il n'est pas nécessaire que le dispositif d'insertion en paquets fonctionne en synchronise avec l'équipement fournissant les données de service.

On constate que, dans chacun des paquets, les mots 11 de verrouillage de trame occupent le même emplacement.

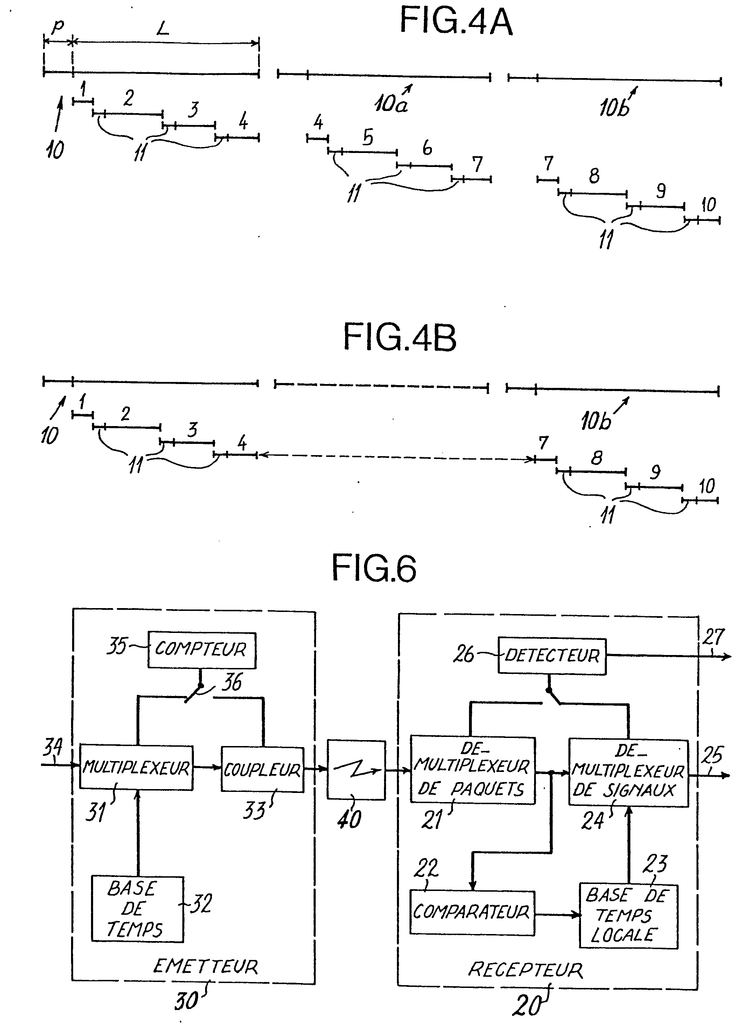

Une comparaison entre les figures 4a et 4b montre qu'en cas de perte d'un paquet 10a, la synchronisation des mots de verrouillage 11 de trame n'est pas perdue : le mot de verrouillage 11 de la trame n° 8 apparaîtra après le mot de verrouillage de la trame n° 4, au bout d'un intervalle de temps qui est un multiple entier de la période de répétition du mot de verrouillage dans un paquet.

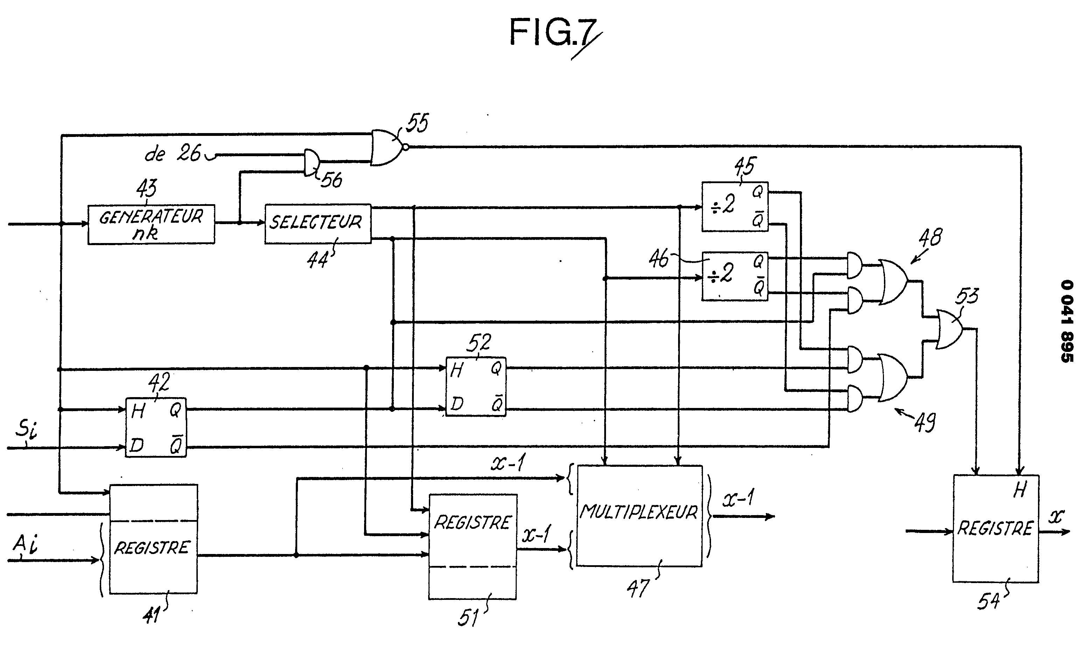

La figure 5 montre, à titre d'exemple, une installation susceptible de mettre en œuvre l'invention. Cette installation comprend un émetteur 30 et un récepteur 20. Les paquets fournis par l'émetteur 30 sont appliqués en succession au récepteur 20 par l'intermédiaire d'une voie qui peut avoir une constitution quelconque. Cette voie 40 peut par exemple comporter :

— un transmetteur sur réseau numérique, une ligne de transmission et un récepteur sur réseau numérique ;

— un émetteur de diffusion relié à un récepteur de diffusion par des moyens quelconques, filaires ou hertziens ;

— un enregistreur fournissant un support qui est ensuite utilisé sur un lecteur.

Dans l'émetteur 30, le signal numérique appliqué sur l'entrée 34 est inséré par un multiplexeur 31 dans la structure de trame définie par une base de temps 32. La longueur I de la trame est un sous-multiple de la longueur ci-dessus L de la partie utile des paquets. Le train numérique ainsi obtenu est transmis à un coupleur 33 qui assure la mise en paquets. Ces paquets sont appliqués à la voie 40 de transmission, de diffusion ou d'enregistrement.

Le récepteur 20, relié à un terminal de réseau, un récepteur de radiodiffusion ou un lecteur de support enregistré constituant l'organe de sortie de la voie 40, reçoit le signal numérique. L'organe d'entrée du récepteur est constitué par un démultiplexeur de paquets 21 qui envoie le train numérique utile, et lui seul, à l'entrée d'un comparateur 22 qui recherche dans ce train la configuration du mot de verrouillage trame, stocké dans une mémoire intégrée au comparateur. Cette configuration doit se retrouver périodiquement, toutes les longueurs l de trame. A chaque reconnaissance, le comparateur 22 envoie à une base de temps locale 23 une impulsion de remise en phase. Cette base de temps 23 attaque un démultiplexeur de signaux 24 qui reçoit également les trains numériques provenant du démultiplexeur de paquets 21. Le signal numérique reconstitué apparaît sur la sortie 25.

La perte d'un paquet se traduisant par la perte d'un nombre entier de trames, il n'y a aucune rupture de périodicité : le comparateur 22 retrouvera le mot de verrouillage de trame à un instant déterminé à la période près, de sorte qu'aucune recherche ne sera nécessaire.

Dans le mode de réalisation montré en figure 5, la perte d'un paquet se traduit par une perte d'information qui n'est pas atténuée. Le mode de réalisation montré en figure 6 se différencie du précédent en ce qu'il permet de détecter la perte d'un ou de plusieurs paquets et donc la dégradation du service. L'installation montrée en figure 6, où les organes correspondant à ceux montrés en figure 5 portent le même numéro de référence, comprend de plus :

— associés à l'émetteur 30, des moyens pour insérer un mot d'indice de continuité incrémenté à chaque paquet ou à chaque trame,

— associés au récepteur 20, des moyens pour détecter toute rupture d'incrémentation.

L'émetteur 30 comporte un compteur d'incrémentation 35 qui engendre un indice de continuité. Des moyens, représentés schématiquement sous forme d'un simple commutateur 36, permettent d'insérer l'indice soit dans le multiplexeur de trame 31 de façon qu'un indice soit incorporé à chaque trame, soit dans le coupleur 33, de façon que l'indice soit incorporé à chaque préfixe.

Dans le récepteur 20, l'indice de continuité est extrait soit par le démultiplexeur de paquets 21 (s'il est incorporé au préfixe), soit par le démultiplexeur 24 (s'il est incorporé à la trame). Cet indice est comparé à l'indice de continuité reçu immédiatement avant dans un détecteur de rupture de continuité 26. Toute rupture d'incrémentation, qui est confirmée par comparaison avec l'indice de continuité suivant fourni par le démultiplexeur 21 ou 24, engendre une alarme sur une sortie 27.

Lorsque le signal numérique transmis est représentatif d'un signal analogique dont les échantillons successifs présentent une corrélation, il est possible d'atténuer les effets d'une perte de paquet par adjonction d'échantillons qui se substituent aux échantillons manquants. Ainsi, lors de la perte d'un paquet, on crée nk échantillons qui sont insérés entre le dernier échantillon N reçu avant perte et le premier échantillon $n + nk + 1$ reçu après rétablissement.

A titre d'exemple, on supposera que chaque mot de x éléments binaires représente un échantillon de signal sonore numérique. Chaque échantillon est la valeur quantifiée d'une valeur analogique mesurée à un rythme périodique, appelé fréquence d'échantillonnage. Chaque échantillon est caractérisé par son signe S défini par un élément binaire (par exemple $S = 0$ si l'échantillon est positif, $S = 1$ si l'échantillon est négatif) et par la valeur absolue de son amplitude A définie par un multiplet de $n_A$ éléments binaires. Ainsi, l'échantillon d'indice i sera représenté par le doublet $(S_i, A_i)$.

Parmi les algorithmes de reconstitution utilisables on peut notamment utiliser celui défini ci-après qui permet d'utiliser des circuits de constitution relativement simple tout en donnant des résultats satisfaisants.

Pour reconstituer les nk échantillons entre les échantillons N et $N + nk + 1$, on admet que :

— l'échantillon $N + 1$ sera représenté par le doublet :

$$\begin{cases} S_{N+1} = \overline{S_N} \\ A_{N+1} = \dfrac{A_N}{2} \quad \text{(modulo 2)} \end{cases}$$

— l'échantillon $N + 2$ sera représenté par :

$$\begin{cases} S_{N+2} = S_N \\ A_{N+2} = \dfrac{A_N}{2^2} \quad \text{(modulo 2)} \end{cases}$$

— l'échantillon $N + \dfrac{nk}{2}$ sera égal à :

4

$$\left(S_{N+\frac{nk}{2}}\right. \begin{cases} = S_N & \text{si} \quad \dfrac{nk}{2} \text{ est pair,} \\[2ex] = \overline{S}_N & \text{si} \quad \dfrac{nk}{2} \text{ est impair} \end{cases}$$

$$A_{N+\frac{nk}{2}} = \frac{A_N}{2^{\frac{nk}{2}}}\Bigg)$$

— l'échantillon $N + \dfrac{nk}{2} + 1$ sera égal à :

$$\left(S_{N+\frac{nk}{2}+1} = \begin{cases} S_{N+nk+1} & \text{si} \quad \dfrac{nk}{2} \text{ est pair} \\[2ex] \overline{S_{N+nk+1}} & \text{si} \quad \dfrac{nk}{2} \text{ est impair} \end{cases}\right.$$

$$A_{N+\frac{nk}{2}+1} = \frac{A_{N+nk+1}}{2^{\frac{nk}{2}}}\Bigg)$$

L'échantillon $N + nk - 1$ sera égal à :

$$\left(S_{N+nk-1} = S_{N+nk+1}, \qquad A_{N+nk-1} = \frac{A_{N+nk+1}}{2^2}\right)$$

L'échantillon $N + nk$ sera égal à :

$$\left(S_{N+nk} = S_{N+nk+1}, \qquad A_{N+nk} = \frac{A_{N+nk+1}}{2}\right).$$

Cette approche peut être utilisée quelles que soient la fréquence d'échantillonnage et la quantification utilisées.

Le système de restitution incorporé au récepteur peut avoir la constitution montrée en figure 7. Ce système comporte une mémoire d'entrée destinée à mémoriser temporairement chaque échantillon à son tour. Cette mémoire comporte :

— une bascule 42 connectée de façon à recevoir l'élément binaire $S_i$ représentatif du signe,

— un registre à décalage 41, comportant $x - 1 + (nk/2)$ étages, connecté de façon que ses $x - 1$ étages inférieurs soient chargés en parallèle par $A_i$ ($x$ désignant le nombre d'éléments binaires par échantillon).

Un signal d'horloge représentatif du rythme d'échantillonnage est appliqué sur l'entrée d'horloge H de la bascule 42 et sur l'entrée de chargement du registre 41.

La bascule 42 et le registre 41 attaquent respectivement une bascule 52 et un registre 51 à $x - 1 + (nk/2)$ positions. Le signal de rythme d'entrée des échantillons est également appliqué à l'entrée d'horloge de la bascule 52 et à l'entrée de chargement du registre 51, de façon que le contenu de la bascule 42 soit mémorisé dans la bascule 52 et que le contenu des $x - 1$ étages inférieurs du registre 41 soit chargé en parallèle dans les $x - 1$ étages supérieurs du registre 51.

Le signal de rythme des échantillons est également appliqué à un générateur 43 qui fournit, en réponse à chaque impulsion de rythme, $nk$ impulsions à un sélecteur 44. Ce sélecteur sépare les $nk$ impulsions en deux trains. Le premier train, formé des $nk/2$ premières impulsions, est appliqué à un diviseur par deux 45. Le deuxième train, formé des $nk/2$ dernières impulsions, est appliqué à un diviseur par deux 46. Le premier train est également appliqué au registre 51 de façon à provoquer le décalage vers le bas du contenu de ce registre. Le deuxième train est appliqué au registre 41 et assure le décalage vers le haut du contenu de ce registre.

Le système comporte également un multiplexeur 47 ayant deux fois $x - 1$ entrées et ayant $x - 1$ sorties. Le multiplexeur 47 est relié aux registres 41 et 51 de façon que le premier jeu d'entrées soit chargé par les $x - 1$ étages supérieurs du registre 41 et le second jeu d'entrées par les $x - 1$ étages supérieurs du registre 51. Les deux sorties du sélecteur 44 sont reliées au multiplexeur 47 de façon à distinguer les $nk/2$ premières impulsions des $nk/2$ dernières impulsions.

Les sorties des bascules de mémorisation 42 et 52 sont reliées à deux jeux de portes de validation 48 et 49, qui ont la même constitution. Le jeu de portes 48 par exemple comporte, pour chaque sortie de la bascule 42, une porte ET dont l'entrée de validation est reliée l'une à la sortie Q du diviseur 46 l'autre à la

5

**0 041 895**

sortie $\bar{Q}$ du diviseur 46. Une porte OU 53 reçoit les sorties des deux jeux de portes 48 et 49 et les applique à l'une des entrées d'un registre de prise en compte 54. Ce registre reçoit également, sur son entrée l'horloge H, les impulsions provenant d'une porte OU-NON 55 dont les entrées sont reliées l'une pour recevoir des signaux représentatifs du rythme d'entrée des échantillons, l'autre les impulsions provenant du générateur 43 par une porte de validation 56. Cette porte 56 et une porte ET dont l'entrée de validation est montée de façon à recevoir le signal d'alarme provenant du détecteur de rupture de continuité 26 (figure 6).

Le registre 54 est également relié aux x − 1 sorties du multiplexeur 47, représentant l'amplitude de l'échantillon reconstitué.

On voit que ce système permet de créer nk échantillons en substitution des nk échantillons manquants entre l'échantillon N et l'échantillon N + nk + 1. Ces échantillons apparaissent pendant l'intervalle de temps où le signal de validation est appliqué à la porte ET 56, c'est-à-dire entre les fronts de prise en compte de l'entrée du $N^{ème}$ et du N + $1^{ème}$ échantillon.

Bien que seul un mode particulier de réalisation de l'invention ait été décrit en détail, l'invention est susceptible de nombreuses variantes de réalisation. Elle est également susceptible d'être appliquée en de très nombreux domaines, notamment dans le domaine de la transmission de signaux sonores, représentatifs de sons de haute qualité (monophonie ou stéréophonie), de sons de moyenne qualité, de commentaires, de sons chiffrés, etc. mais aussi dans tout autre domaine, en particulier lorsque les échantillons successifs présentent entre eux une certaine corrélation.

## Revendications

1. Procédé de transmission de données numériques suivant une procédure par paquets contenant k trames de chacune n mots de plusieurs éléments binaires, caractérisé en ce qu'à l'insertion, on impose aux paquets un format fixe, prédéterminé à l'émission et à la réception, ayant une longueur prédéterminée L de la partie utile et en ce qu'on structure les données suivant une trame de longueur fixe l qui est un sous-multiple de L.

2. Procédé de transmission de données numériques sous forme de mots représentant des échantillons corrélés suivant la revendication 1, caractérisé en ce qu'on insère dans le préfixe de chaque paquet ou dans le mot de verrouillage de chaque trame, de façon en soi connue, un mot d'indice de continuité qu'on incrémente d'une unité à chaque paquet ou à chaque trame transmise ou diffusée ; on détecte les ruptures d'incrémentation éventuelles à la réception ; et on crée, à la réception, le nombre manquant d'échantillons à partir du dernier échantillon N reçu avant rupture de la transmission et le premier échantillon N + nk + 1 reçu après rétablissement.

3. Dispositif de transmission de données numériques suivant une procédure par paquets, dont le dispositif d'insertion à l'émission comprend des moyens pour répartir les données numériques, se présentant sous forme de mots de plusieurs éléments binaires, en paquets comprenant un préfixe et une partie utile et des moyens pour regrouper les mots sous forme de trames numériques successives de plusieurs mots de plusieurs éléments binaires précédées chacune d'un mot de verrouillage de trame de constitution reconnaissable, caractérisée en ce que lesdits moyens sont réalisés pour imposer aux paquets une longueur prédéterminée L de zone utile et pour structurer les données suivant une trame de longueur fixe l qui est un sous-multiple de L.

4. Dispositif suivant la revendication 3 de transmission ou de diffusion de données constituées par des mots représentant des échantillons corrélés, caractérisée en ce qu'elle comprend des moyens (35) pour insérer, dans le préfixe de chaque paquet ou dans le mot de verrouillage de chaque trame, un mot d'indice de continuité et pour incrémenter ce mot d'une unité à chaque paquet ou trame transmis et un détecteur incorporé au dispositif de réception et muni de moyens (26) de détection de rupture d'incrémentation ; et en ce que le récepteur comprend des moyens pour créer des échantillons et les substituer aux échantillons manquants en réponse à la détection d'une rupture d'incrémentation indiquant la perte d'un paquet.

5. Dispositif suivant la revendication 4, caractérisée en ce que les moyens de création d'échantillons sont prévus pour créer des mots de substitution à partir de la valeur du dernier mot reçu avant détection de rupture d'incrémentation et du premier mot reçu après rétablissement.

## Claims

1. Method for communication of digital data according to a procedure using packets comprising k frames each having n words having a plurality of bits, characterized in that a fixed format, which is predetermined at the transmission and reception levels, is imposed to the packets upon insertion, said packets having a predetermined length L of the useful part, and in that the data are structured according to a frame having a fixed length l which is a sub-multiple of L.

2. Method according to claim 1 for transmission of digital data as words representative of correlated samples, characterized in that a continuity index word is inserted into the prefix of each packet or into the locking word of each frame in a known manner, said continuity index word being increased by 1 upon each transmission or diffusion of each packet or frame ; the possible lacks of continuity are detected at reception ; and the missing samples are generated at reception, based on the last sample N received before communication failure and from the first sample N + nk + 1 received after recovery.

3. Device for communication of digital data according to a packet procedure, wherein the device for insertion on sending comprises means for distributing the digital data, which occur as multi-bit words, into packets comprising a prefix and a useful part and means for associating the words into successive digital frames each having a plurality of words of several bits, each frame preceded with a frame locking word having an identifiable constitution, characterized in that said means are constructed for giving a predetermined length L to the useful part of the packets and for structuring the data according to a frame having a fixed length which is a sub-multiple of L.

4. Device according to claim 3, for transmission or diffusion of data consisting of words which represent correlated samples, characterized in that it comprises means (35) for inserting, into the prefix of each packet or into the locking word of each frame, a continuity index word and for increasing by one that word upon each transmission of a packet or frame, and comprises a detector which is implemented in the receiving device and is provided with means (26) for detecting lack of continuity in the increase ; and in that the receiver comprises means for generating samples and substituting them to the missing samples in response to the detection of a lack of continuity indicating loss of a packet.

5. Device according to claim 4, characterized in that the means for generating samples are constructed for generating substitution words from the values of the last word received before detection of lack of continuity and the first word received after recovery.


**Ansprüche**

1. Verfahren zur Übertragung von digitalen Daten in Form von Paketen, von denen jedes k Rasterblöcke mit jeweils n aus mehreren binären Elementen bestehenden Wörtern enthält, dadurch gekennzeichnet, daß man den Paketen beim Einfügen ein festes vorbestimmtes Format beim Senden und beim Empfang verleiht, dessen Nutzteil eine vorbestimmte Länge L aufweist, und daß man die Daten in Rasterblöcken mit fester Länge l strukturiert, wobei diese Länge l eines Rasterblocks ein Untervielfaches der Länge L des Nutzteils eines Pakets ist.

2. Verfahren nach Anspruch 1 zur Übertragung von digitalen Daten in Form von korrelierte Abtastproben darstellenden Wörtern, dadurch gekennzeichnet, daß man in das Präfix jedes Pakets oder in das Synchronwort jedes Rasterblocks in an sich bekannter Weise ein Kontinuitätsindexwort einfügt, das bei jedem übertragenen oder ausgestrahlten Rasterblock oder Paket einer Inkrementierung um eine Einheit unterworfen wird, daß man beim Empfang eventuelle Unterbrechungen der Inkrementierung ermittelt, und daß man beim Empfang die fehlende Anzahl von Abtastproben auf der Grundlage der letzten vor der Unterbrechung empfangenen Abtastprobe N und der ersten nach der Wiederherstellung empfangenen Abtastprobe N + nk + 1 erzeugt.

3. Einrichtung zur Übertragung von digitalen Daten in Form von Paketen, deren sendeseitige Einfügungsvorrichtung Mittel aufweist, durch welche die in Form von Wörtern mit mehreren binären Elementen auftretenden digitalen Daten in Pakete aufteilbar sind, die ein Präfix und einen Nutzteil umfassen, sowie Mittel zur Umgruppierung der Wörter in die Form von aufeinanderfolgenden Rasterblöcken die jeweils aus mehreren Wörtern mit mehreren binären Elementen bestehen und denen jeweils ein wiedererkennbares Rasterblocksynchronwort vorangesetzt ist, dadurch gekennzeichnet, daß die genannten Mittel derart ausgebildet sind, daß sie den Paketen eine vorbestimmte Länge L des Nutzbereichs verleihen, und die Daten in Rasterblöcken mit der festen Länge l strukturieren, die ein Untervielfaches der Länge L des Nutzteils eines Pakets ist.

4. Einrichtung nach Anspruch 3 zur Übertragung oder Ausstrahlung von Daten, die von korrelierte Abtastproben repräsentierenden Wörtern gebildet sind, gekennzeichnet durch Mittel (35), durch die in das Präfix jedes Pakets oder in das Synchronwort jedes Rasterblocks ein Kontinutätsindexwort einfügbar und dieses Wort für jedes gesendete Paket bzw. jeden gesendeten Rasterblock um eine Einheit inkrementierbar ist, und durch einen der Empfangseinrichtung zugeordneten Detektor, der mit Mitteln (26) zur Erfassung von Unterbrechungen der Inkrementierung ausgestattet ist, ferner dadurch gekennzeichnet, daß der Empfänger Mittel aufweist, mit denen bei der Erfassung einer den Verlust eines Pakets anzeigenden Unterbrechung der Inkrementierung Abtastproben erzeugbar sind, durch welche die fehlenden Abtastproben ersetzbar sind.

5. Einrichtung nach Anspruch 5, dadurch gekennzeichnet, daß die Mittel zur Erzeugung von Abtastproben so ausgebildet sind, daß sie auf der Grundlage der letzten vor der Unterbrechung der Inkrementierung empfangenen Abtastprobe N und der ersten nach der Wiederherstellung empfangenen Abtastprobe N + nk + 1 Ersatzwörter bilden.

# FIG.1

# FIG.2

# FIG.3

# FIG.5

| MULTIPLEXEUR | COUPLEUR | DE-MULTIPLEXEUR DE PAQUETS | DE-MULTIPLEXEUR DE SIGNAUX |
| BASE DE TEMPS | | COMPARATEUR | BASE DE TEMPS LOCALE |

EMETTEUR   RECEPTEUR

0 041 895

FIG.4A

FIG.4B

FIG.6

# FIG.7

0 041 895